Europäisches Patentamt

(19) European Patent Office

Office européen des brevets

(11) Publication number : **0 370 557 B1**

(12) **EUROPEAN PATENT SPECIFICATION**

(45) Date of publication of patent specification :
**12.08.92 Bulletin 92/33**

(51) Int. Cl.⁵ : **G01F 1/36, G01F 1/42**

(21) Application number : **89202870.5**

(22) Date of filing : **10.11.89**

(54) **Gas meter.**

(30) Priority : **22.11.88 NL 8802878**

(43) Date of publication of application :
**30.05.90 Bulletin 90/22**

(45) Publication of the grant of the patent :
**12.08.92 Bulletin 92/33**

(84) Designated Contracting States :
**AT BE CH DE ES FR GB GR IT LI LU NL SE**

(56) References cited :
**EP-A- 0 086 259**
**DE-B- 1 648 059**
**DE-C- 3 417 604**
**US-A- 3 428 079**
**US-A- 4 790 194**

(56) References cited :
**RESEARCH DISCLOSURE, no. 228, April 1983,**
**summary no. 22804, Havant Hampshire, GB;**
**"Flow meter"**
**PATENT ABSTRACTS OF JAPAN, vol. 8, no.**
**208 (P-302)[1645], 21st September 1984; &**
**JP-A-59 92 313**

(73) Proprietor : **EMS HOLLAND B.V.**
**Meidoornweg 2**
**NL-1171 JW Badhoevedorp (NL)**

(72) Inventor : **Kramer, Albert**
**Otto Hahnweg 3**
**NL-3731 CC De Bilt (NL)**

(74) Representative : **van der Arend, Adrianus G.A.,**
**Ir. et al**
**EXTERPATENT B.V. P.O. Box 90649**
**NL-2509 LP The Hague (NL)**

## Description

Method of measuring a quantity of gas flowing per unit time through a pipe provided with an adjustable restriction having a number of selectable different restriction areas, comprising measuring a pressure parameter of the gas, selecting a larger or smaller restriction area depending on an increase or decrease respectively of the pressure parameter, and calculating the quantity of gas from the pressure parameter and the selected restriction area.

A method of this type is known from US patent 3,875,955 (Gallatin).

In the known method the restriction area is constantly increased or reduced in such a way that a flow rate determinative fluid parameter, represented by an absolute input pressure divided by the square of the absolute input temperature of the gas, is essentially constant. Then the flow rate to be computed is linearly the product of said parameter and the restriction area. Since, due to various delays occurring in controlling the restriction area, the adjustment of the restriction area does not take place at the same time as that at which the said input pressure and input temperature are measured, during the adjustment the restriction area will not constitute an accurate measure for the quantity of gas flowing through the pipe. The inaccuracy of the measurement of the quantity of gas is then undesirably high in particular when relative to the delays there are rapidly occurring changes in the quantity of gas flowing through the pipe and/or small quantities of gas flowing through the pipe. This inaccuracy is further increased through the fact that the restriction area is increased or reduced stepwise, and in order to keep said parameter as constant as possible, it is necessary to have a large number of individually adjustable valves, which disturb the flow behaviour of the gas depending on whether or not the various valves are open or closed, so that said parameter is difficult to keep dynamically constant. Apart from this the error of the determined flow rate is always at least a factor which equals the maximum and minimum discrete restriction area ratio.

The object of the invention is to eliminate the disadvantages of the known method.

The method of the type mentioned in the preamble is therefore according to the invention characterized in that the pressure parameter is constituted by the pressure difference across the restriction, with each restriction area there is associated a pair of an upper limit pressure difference and a lower limit pressure difference, said pair of limits providing a range of measurable values of pressure differences, and a larger or smaller restriction area is selected when the measured pressure difference is larger or smaller respectively than the upper limit pressure difference or lower limit pressure difference respectively associated with the currently selected restriction area and in that, the quantity of gas is calculated using the product of a function of the pressure difference actually measured and a factor depending on the selected restriction area. This means that the quantity of gas flowing through the pipe is determined by the current restriction area and the actual current pressure difference, so that relatively high accuracy in determining the quantity of gas is obtained and the process can be used for measuring relatively rapidly changing quantities of gas and/or small quantities of gas. Since each selectable restriction area corresponds to a range of measurable pressure differences the number of restriction areas can be small, so that the frequency of selecting a different restriction area is made relatively small providing a smoother measuring process while retaining a rapid response to changes in the quantity of gas and the measuring accuracy thereof. The error of the determined flow rate is independent on the selected size of the restriction area but practically only on the accuracy of the pressure difference measurement.

Preferably with a decreasing quantity of gas a progressively smaller restriction area is selected. In this way the accuracy for small quantities of gas is increased.

Preferably the lower limit pressure difference associated with a restriction area is made to correspond to a smaller quantity of gas than a quantity of gas which is made to correspond to the upper limit pressure difference associated with an immediately preceding smaller restriction area. Thereby the occurrence of resonance phenomena when selecting other restriction areas is prevented.

The invention also relates to a gas meter according to claims 4 to 12 inclusive in which the process according to the invention is used.

In EP-A-0086259 there is disclosed a gas meter comprising a pipe with an adjustable restriction for allowing through a gas flow, a pressure sensor for measuring a pressure difference over the restriction, adjustable valve means disposed at the restriction for adjusting the restriction area, a sensor for measuring the said restriction area and computation means connected to said sensors for determining the gas flow through the meter dependent on the product of the measured pressure difference and the measured restriction area. In an elaboration of said meter the valve means can be controlled to control the restriction area to an area for which a computed flow rate equals a said input value for the flow rate. The valve means does not have distinct, stepped selectable areas with associated thereto a pair of upper and lower limit pressure differences.

DE-C-3417604 discloses a flow resistor consisting of a number of distinct parallel flow channels and having upstream a plate extending perpendicular to said channels and having through holes therein and which can be rotated into several angular positions to have different numbers of through holes in front of said channels. The central channel always has a through hole of said plate in front of it and is the only channel having an upstream measuring duct and a downstream measuring duct both extending perpendicular to said central channel and used to measure a pressure difference between them. So this prior art gas meter does not provide a single channel having a restriction area selected out of a number of areas, each associated with a pair of upper and lower pressure difference limits.

US 3428079 discloses a flow measurement and control system in which a flow is measured as a function of a pressure differential across a variable orifice and in which means are provided for increasing the size of the orifice for increasing values of the flow to obtain a more nearly straight line relationship between flow and differential pressure than would be obtained with a fixed size of orifice, the variable orifice being a motor operated valve, and a differential pressure responsive transducer providing an output signal for the motor operated valve. This prior art system does not provide a number of distinct orifice areas, each having associated therewith a pair of upper and lower pressure difference limits. In stead the motor operated valve is controlled continuously dependent on the pressure differential measured.

From Research Disclosure no. 228, April 1983, summary no. 22804, Havant Hampshire GB "Flow meter" there is known a flow meter for measuring the flow rate of a medium in a pipe, whereby the pipe has a first valve having an adjustable restriction area across which the pressure difference is measured. The measured pressure difference is converted into a control signal for a second valve provided downstream of the first valve to control the flow rate to a desired value. The restriction area of the first valve is adjustable by set point means.

The invention is explained with reference to the drawings. In the drawings:

Fig. 1 shows schematically and partially in cross section an embodiment of a gas meter in which the process according to the invention is used;

Fig. 2 shows a graph, illustrating the operation of the gas meter shown in fig. 1, of the pressure difference over a restriction in a pipe as a function of a quantity of gas flowing through the pipe, and a quantity of gas flowing through the pipe, and depending on the restriction area;

Fig. 3a shows a front view of the restriction discs used in the gas meter of fig. 1;

Fig. 3b shows a front view of a central disc of the discs shown in fig. 3a;

Fig. 4 shows a graph, illustrating the operation of the gas meter shown in fig. 1, of the restriction area as a function of the relative angle of rotation of the restriction discs shown in fig. 3a; and

Fig. 5 shown a graph, illustrating the gas meter shown in fig. 1, of the quantity of gas flowing through the pipe of the meter as a function of the relative angle of rotation of the restriction discs shown in fig. 3a en 3b for various values of the pressure difference over the restriction.

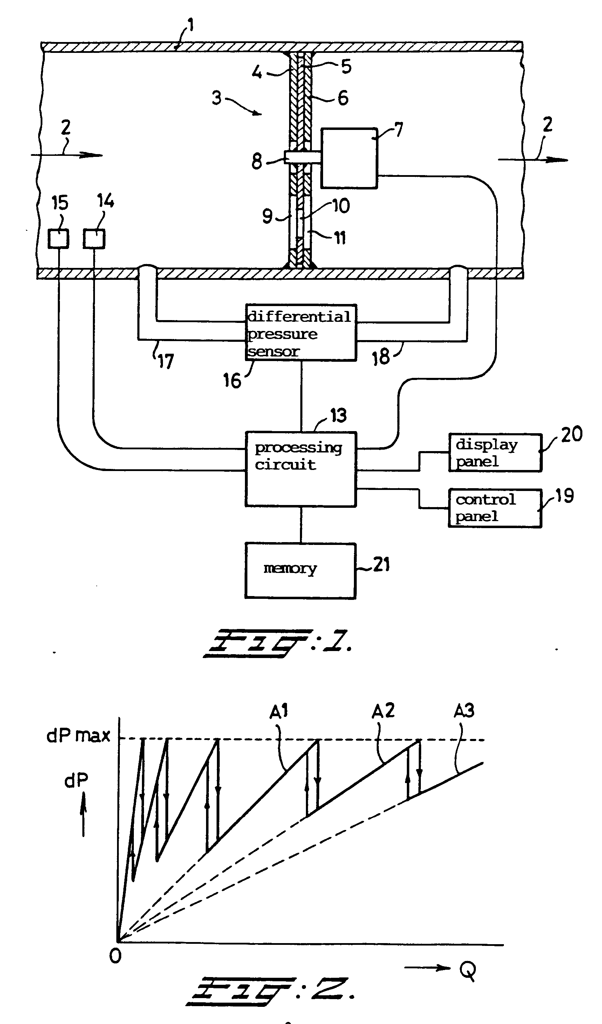

Fig. 1 shows a gas meter according to the invention which is suitable for application of the process according to hte invention.

The gas meter comprises a pipe 1 through which gas can flow in the direction indicated by the arrows 2. The pipe 1 has a restriction 3 which is formed by three discs 4, 5 and 6 which are disposed against each other and at right angles to the flow of gas in the pipe 1, the discs 4 and 6 of which rest in sealing fashion against the inside wall of the pipe 1, and the disc 5 of which is rotatable between the discs 4 and 6 by means of a stepping motor 7, which is disposed in the pipe 1 in such a way (not shown) that it does not rotate, and a shaft 8 of which is connected to the centre of the disc 5. The discs 4, 5 and 6 each have a passage 9, 10 and 11 respectively, the passages 9 and 11 of which are disposed opposite each other, while through suitable control of the stepping motor 7 the passage 10 can be turned more or less opposite the passages 9 and 11, so the the area, which will also be called restriction area below, of the common passage of the discs, 5 and 6 can be set for the gas. For this, the stepping motor 7 is connected to a processing circuit 13, which is also connected to an absolute temperature sensor 14 disposed in the pipe 1, an absolute pressure sensor 15 disposed in the pipe 1, a pressure difference meter 16, which is connected by means of pipes 17 and 18 to the spaces on either side of the restriction 3, a control panel 19, a display panel 20, and a memory 21.

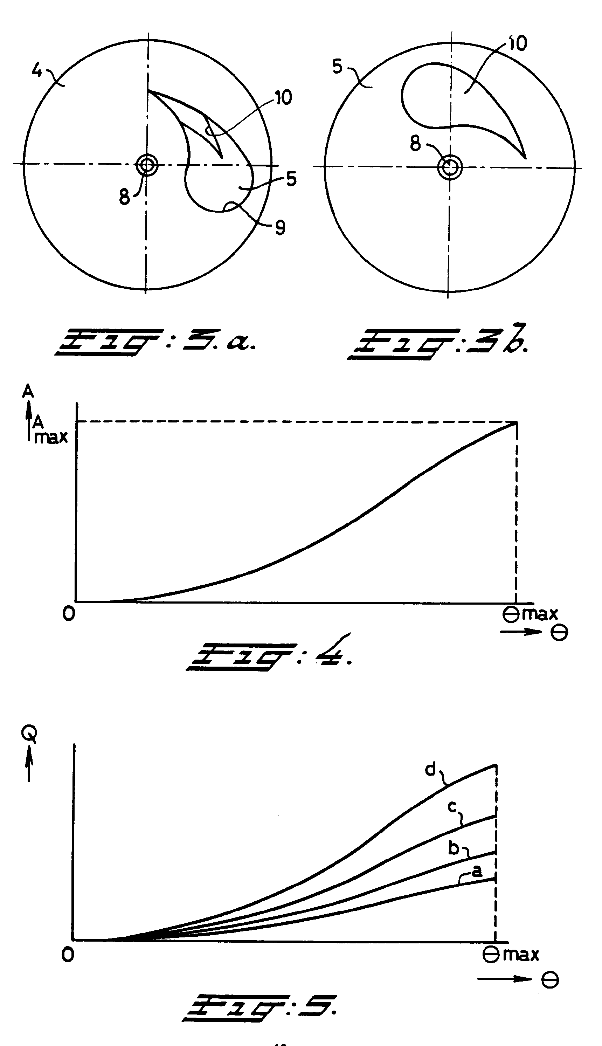

As can be seen from the graph shown in fig. 2 by way of example, the pressure difference dP measured by the pressure difference meter 16 is zero when the gas is at a standstill in the pipe 1 and the quantity Q of gas flowing through the pipe 1 per unit time is thus zero. At a particular restriction surface the pressure difference will change in approximately linear fashion as a function of the quantity Q of gas flowing through the pipe 1. This applies to each of the areas which can be set for the restriction 3. In fig. 2 the line parts indicated by A1, A2 and A3 correspond to respective increasing restriction areas. With a particular restriction area it is therefore the case that the quantity 1Q of gas flowing through the pipe 1 is approximately equal to the product of the pressure difference dP and the selected restriction surface Ai, thus:

$$Q = dP \times Ai \quad (1)$$

The quantity must, however, be adjusted for the absolute temperature Ta in the pipe 1, the absolute pressure Pa in the pipe 1, and the properties of the gas, so that:

3

$$Q = dP \times k \quad (2)$$

in which k is a function of Ai, Ta, Pa and the gas properties.

It is also desirable to refer the quantity of gas measured per unit time to a standard quantity for a standard temperature Tn and a standard pressure Pn, so that:

$$Q = dP \times Pa/Ta \times Kn \quad (3)$$

in which Kn is a function of k and Tn and Pn.

In accordance with the formula (3) given above, the quantity of gas flowing through the pipe 1 per unit time is thus determined depending on the current pressure difference dP.

If, as shown in fig. 2, the pressure difference dP for a selected restriction surface rises above a certain value, in fig. 2 chosen equal to dP max. for all restriction surfaces, the processing circuit 13 through appropriate control of the stepping motor 7 selects a greater restriction area, and the processing circuit 13 selects a smaller restriction area when the pressure difference falls below a minimum pressure difference appertaining to the current restriction area. The transition for the choice between two different restriction surfaces has a hysteresis, as shown in fig. 2 by the vertical lines provided with arrows. This counteracts oscillation of the measurement.

According to the invention, various values of the pressure difference dP can be measured for a selected restriction area, so that each point of each slanting line part in fig. 2 represents a value of the pressure difference dP to be measured, so that the gas quantity Q can always be calculated accurately and dynamically with the aid of the current dP.

Fig. 3a shows a front view of the packet of discs 4, 5 and 6. The disc 6 is of the same design and has the same orientation as the disc 4, so that the disc 6 is not visible in fig. 3a. The passages 9, 10 and 11 are congruent and are preferably of a shape which resembles a side view of a disintegrating droplet curved round the central area of the discs, the passages 9 and 11 are running in the same direction and aligned relative to each other, while the passage 10 runs in the opposite direction to that of the passages 9 and 11. Fig. 3b is a front view of the aperture 10 in disc 5, separated from the assembly, assuming the disc 5 is positioned as shown in fig. 3a. As shown in fig. 4, this means that with a decreasing angle of rotation O of the rotary disc 5 the restriction area A decreases progressively, so that a small restriction area can be set relatively more accurately than a larger restriction area.

Fig. 5 shows the quantity Q of gas flowing through the pipe 1 as a function of the angle O of the rotary disc 5 for several values of the pressure difference dP. Fig. 5 shows four isocurves a, b, c, d for various pressure differences dP. The pressure difference represented by the curve d is double the pressure difference represented by the curve c, which is double the pressure difference reporesented by the curve b, which is double the pressure difference represented by the curve a. It can be seen from fig. 5 that, due to the special design of the discs 4, 5 and 6 shown in fig. 3a and 3b, the quantity of gas Q flowing per unit time through the pipe 1 can be measured with better absolute accuracy for smaller quantities.

The memory 21 is suitable for storage therein of a program with which the process according to the invention is carried out, constants such as Tn, Pn, values of gas properties, measured pressure values, measured temperature values, and the total quantity of gas V which has flowed through the pipe 1, which is determined by integration in time of the quantity Q of gas which has flowed through the pipe 1 per unit time. The memory 21 is also suitable for storing a calibration table drawn up after the production of the meter and used for correcting the gas quantity determined.

By means of the control panel 19, the content of the memory 21 can be input fully or partially via the processing circuit 13 into the memory 21 or can be displayed therefrom on the display panel 20. The data present in the memory 21 can also be output via an output of the processing circuit 13 not shown.

Through use of the discs 4, 5 and 6 shown in fig. 3a and 3b for the restriction, and by taking into account the pressure difference dP when determining the quantity Q of gas flowing through the pipe 1, a large measuring range for the gas quantity, for both large and small quantities and great accuracy and a rapid response are obtained. As a result of the rapid response, measurements can be made more frequently, so that the total gas quantity measured within a relatively long period can be measured with corresponding accuracy.

A different, more extensive, representation of the calculations to be made is as follows. The symbols used are:

Dp = pressure difference over valve (restriction).
Pa = absolute pressure of medium.
Ta = absolute temperature of medium.
Vol = the amount of medium passed in a certain time.
K1...n = valve-position constants for positions 1 through n.
Q = amount of flow of medium through valve.
Qn = idem in respect to 273.15K and 1013.33 mbar.
Exp = exponent between 0.5 and 1, depending on the shapes of the valve.

4

Rho = density of medium, compensated for Pa and Ta.
Rgas = a density constant of a certain medium (gases).
v = velocity of the medium in the valve.
C = constant depending on Kn.
t = time passed between two calculations of Vol.

The velocity of the medium inside the valve is:

$$v = C \times ( 2 \times Rho \times Dp )^{Exp}$$

With: Rho = Rgas x ( Pa / Ta )
The flow Q is:

$$Q = Kn \times v$$

To normalize the flow, we use the wellknown formula:

$$Qn = Q \times \frac{Pa}{Pn} \times \frac{Tn}{Ta}$$

With: Pn = 1013.33 mbar and Tn = 273.15 K.
The passed amount of medium is then:

$$Vol = Qn \times t$$

Thus the complete formula is:

$$Vol = Kn \times C \times ( 2 \times Rho \times Dp )^{Exp} \times t \times \frac{Pa \times Tn}{Pn \times Ta}$$

The total delivered volume of medium is:

$$Vol(new) = Vol(old) + Vol$$

From the above formula it will be apparent that the calculation of the volume is dependent on the characteristics of the gas actually to be measured and several constants. Therefore the positions of the valve and thus the restriction areas to be selected with associated upper and lower limits of the pressure difference ranges will be defined during calibration of the gas meter for the actual circumstances.

The first position of the valve has a lower limit of zero for both flow and pressure. The upper pressure limit is equal for all positions. The lower pressure limit is higher for higher flow-ranges. This is because of the exponent in the formula for the flow, which causes less accuracy with lower pressure. So it is important to increase the lower pressure limit with increasing flow.

Also a certain hysteresis is necessary to prevent the valve to oscilate between two positions. There are two ways to establish this hystereris: by pressure or by flow. The hysteresis is only calculated when the position has to be decreased. Increasing the position happens always when the pressure difference exceeds the upper limit.

## Claims

1. Method of measuring a quantity of gas flowing per unit time through a pipe provided with an adjustable restriction having a number of selectable different restriction areas, comprising measuring a pressure parameter of the gas, selecting a larger or smaller restriction area depending on an increase or decrease respectively of the pressure parameter, and calculating the quantity of gas from the pressure parameter and the selected restriction area, **characterized in that** the pressure parameter is constituted by the pressure difference across the restriction, with each restriction area there is associated a pair of an upper limit pressure difference and a lower limit pressure difference, said pair of limits providing a range of measurable values of pressure differences, and a larger or smaller restriction area is selected when the measured pressure difference is larger or smaller respectively than the upper limit pressure difference or lower limit pressure difference respectively of the currently selected restriction area, and in that the quantity of gas is calculated using the product of a function of the pressure difference actually measured and a factor depending on the selected restriction area.

2. Method according to claim 1, **characterised in that** with a decreasing quantity of gas a progressively smaller restriction area is selected.

3. Method according to claim 1 or 2, **characterized in that** the lower limit pressure ddifference associated with a restriction area is made to correspond to a smaller quantity of gas than a quantity of gas which is made to correspond to the upper limit pressure difference associated with an immediately preceding smaller restriction area.

4. Gas meter, comprising a pipe with an adjustable restriction for allowing through a gas flow, a pressure sensor for measuring a pressure parameter of the gas, valve means disposed at the restriction, control means connected to the pressure sensor and the valve means, and which set the valve means depending on the pressure parameter for selection of one restriction area out of a number of different restriction areas, while selecting a greater or smaller restriction area depending on an increase or decrease respectively of the pressure parameter, and computation means connected to the control means and arranged to compute the quantity of gas flowing per unit time through the pipe from the pressure parameter and the selected restriction area and for providing a measuring quantity value dependent on the selected restriction area, **characterized in that** the sensor measures the pressure difference across the restriction, with each selectable restriction area there is associated a pair of an upper limit pressure difference and a lower limit pressure difference stored in a memory of the computation means said pair of limits providing a range of measurable values of pressure differences, the computation means receiving a value corresponding to the actual pressure difference, selecting a larger or smaller restriction area when the measured actual pressure difference is greater or smaller respectively than the upper or lower limit pressure difference respectively of the currently selected restriction area, and calculating the gas flow from the product of a function of the actual pressure difference value and a factor depending on the restriction area.

5. Gas meter according to claim 4, **characterised in that** the selectable restriction areas are progressively smaller with decreasing gas quantities to be measured.

6. Gas meter according to claim 4 or 5, **characterised in that** a lower limit pressure difference of a restriction area corresponds to a gas quantity which is smaller than a gas quantity corresponding to the upper limit pressure difference of an immediately preceding smaller restriction area.

7. Gas meter according to one of claims 4 to 6, **characterised in that** the valve means comprise two discs which are disposed against each other essentially at right angles to the gas flow path and with driving means connected to one of the discs and to the control means, each disc having such a passage that the passages form the restriction, while the driving means in response to a control signal received from the control means are capable of turning one disc over the other disc to change the restriction area.

8. Gas meter according to claim 7, **characterised in that** the valve means comprise a third, outer, disc disposed against the other discs and having a passage corresponding to the passage of the other outer disc and being rotable relative to the central disc.

9. Gas meter according to claim 7 or 8, **characterised in that** the passages of the discs are of such shape that with decreasing relative angle of rotation of the discs the restriction area decreases progressively from the smallest area to the smallest area.

10. Gas meter according to claim 8 or 9, **characterised in that** each passage is essentially the shape of a side view of a disintegrating droplet curved round the central area of the disc in question, the shape of the passage of a disc being rotatable with respect to another disc having an orientation opposite to that of said other disc.

11. Gas meter according to claim 9 or 10, **characterised in that** each disc has a number of similar passages, each passage corresponding to only one passage of another disc when rotating the discs with respect to each other.

12 Gas meter according to claim 4, **characterised in that** the driving means comprise a stepping motor.


**Patentansprüche**

1. Verfahren zum Messen einer pro Zeiteinheit durch ein Rohr mit verstellbärer Meßblende strömenden Gasmenge, wobei die Meßblende eine Reihe wählbarer unterschiedlicher Blendenbereiche besitzt, bei welchem man einen Gasdruckparameter mißt, je nach Erhöhung oder Verminderung des Druckparameters einen größeren oder kleineren Blendenbereich wählt, und die Gasmenge aus dem Druckparameter und dem gewählten Blendenbereich berechnet, **dadurch gekennzeichnet, daß** der Druckparameter aus der Druckdifferenz an der Meßblende besteht, daß jedem Blendenbereich paarweise ein oberer und ein unterer Grenzwert für die Druckdifferenz zugeordnet ist, daß das Paar von Grenzwerten einen Bereich meßbarer Werte der Druckdifferenzen liefert und je nachdem, ob die gemessene Druckdifferenz größer bzw. kleiner als der obere bzw. untere Grenzwert für den Druckparameter bei dem augenblicklich gewählten Blendenbereich ist, ein größerer oder kleinerer Blendenbereich gewählt wird, und daß die Gasmenge anhand des Produkts aus einer Funktion der augenblicklich gemessenen Druckdifferenz und einem vom gewählten Blendenbereich abhängigen Faktor berechnet wird.

2. Verfahren nach Anspruch 1, **dadurch gekennzeichnet, daß** ein umso kleinerer Blendenbereich gewählt wird, je stärker die Abnahme der Gasmenge ist.

3. Verfahren nach Anspruch 1 oder 2, **dadurch gekennzeichnet, daß** der einem Blendenbereich zugeordnete untere Grenzwert der Druckdifferenz so gehalten ist, daß er einer Gasmenge entspricht, die kleiner als die Gasmenge ist, die dem einem unmittelbar davor liegenden kleineren Blendenbereich zugeordneten oberen Grenzwert der Druckdifferenz entspricht.

4. Gasuhr mit einem Rohr mit einstellbarer Meßblende für den Durchfluß eines Gasstroms, mit einem Druckfühler zum Messen eines Gasdruckparameters, mit einer an der Meßblende angeordneten Ventileinrichtung, mit einer mit dem Druckfühler und der Ventileinrichtung verbundenen Regeleinrichtung, welche die Ventileinrichtung in Abhängigkeit von dem Druckparameter zum Auswählen eines unter mehreren verschiedenen Blendenbereichen einstellt, während je nachdem, ob der Druckparameter zu- oder abnimmt, ein größerer oder kleinerer Blendenbereich wählbar ist, sowie mit einer mit der Regeleinrichtung verbundenen Recheneinrichtung, die so angeordnet ist, daß sie die pro Zeiteinheit durch das Rohr strömende Gasmenge aus dem Druckparameter und dem gewählten Blendenbereich berechnet und in Abhängigkeit von dem gewählten Blendenbereich einen Mengenwert für die Messung liefert, **dadurch gekennzeichnet, daß** der Sensor die Druckdifferenz an der Meßblende messt, wobei daß jedem wählbaren Blendenbereich paarweise ein oberer und ein unterer Grenzwert für die Druckdifferenz zugeordnet und in einem Speicher der Recheneinrichtung gespeichert ist, wobei das Paar von Grenzwerten einen Bereich meßbarer Werte der Druckdifferenzen liefert, wobei die Recheneinrichtung einen dem Ist-Wert der Druckdifferenz entsprechenden Wert übernimmt, wobei je nachdem, ob der Ist-Wert der gemessenen Druckdifferenz größer bzw. kleiner als der obere bzw. untere Grenzwert für den Druckparameter bei dem augenblicklich gewählten Blendenbereich ist, ein größerer oder kleinerer Blendenbereich gewählt wird, und daß der Gasstrom aus dem Produkt aus einer Funktion der augenblicklich gemessenen Druckdifferenz und einem vom gewählten Blendenbereich abhängigen Faktor berechnet wird.

5. Gasuhr nach Anspruch 4, **dadurch gekennzeichnet, daß** die wählbaren Blendenbereiche umso kleiner sind, je stärker die Abnahme der Gasmenge ist.

6. Gasuhr nach Anspruch 4 oder 5, **dadurch gekennzeichnet, daß** ein unterer Grenzwert der Druckdifferenz eines Blendenbereichs einer Gasmenge entspricht, die kleiner als eine dem oberen Grenzwert der Druckdifferenz entsprechende Gasmenge bei einem unmittelbar davor liegenden kleineren Blendenbereich ist.

7. Gasuhr nach einem der Ansprüche 4 bis 6, **dadurch gekennzeichnet, daß** die Ventileinrichtung zwei im wesentlichen rechtwinklig zum Gasströmungsweg gegeneinander angeordnete Scheiben aufweist, und daß eine mit einer der Scheiben und der Steuereinrichtung verbundene Betätigungseinrichtung vorgesehen ist, wobei jede Scheibe einen so gestalteten Durchlaß aufweist, daß die Durchlässe die Meßblende bilden, während mittels der Betätigungseinrichtung im Ansprechen auf ein von der Steuereinrichtung eingehendes Ansteuersignal eine Scheibe unter Veränderung des Blendenbereichs über die andere Scheibe drehbar ist.

8. Gasuhr nach Anspruch 7, **dadurch gekennzeichnet, daß** die Ventileinrichtung eine dritte äußere Scheibe aufweist, welche gegen die anderen Scheiben anliegt und einen Durchlaß aufweist, der dem Durchlaß der anderen äußeren Scheibe entspricht und gegenüber der mittleren Scheibe drehbar ist.

9. Gasuhr nach Anspruch 7 oder 8, **dadurch gekennzeichnet, daß** die Durchlässe der Scheiben so geformt sind, daß bei abnehmendem relativen Drehwinkel der Scheiben der Blendenbereich allmählich vom größten zum kleinsten Wert hin abnimmt.

10. Gasuhr nach Anspruch 8 oder 9, **dadurch gekennzeichnet, daß** jeder Durchlaß im wesentlichen die Form eines um den Mittelbereich der jeweiligen Scheibe herum sich auflösenden Tröpfchens in Seitenansicht aufweist, wobei die Form des Durchlasses einer gegenüber einer anderen Scheibe drehbaren Scheibe entgegengesetzt zur Form in der anderen Scheibe ausgerichtet ist.

11. Gasuhr nach Anspruch 9 oder 10, **dadurch gekennzeichnet, daß** jede Scheibe eine Reihe ähnlicher Durchlässe aufweist, wobei jeder Durchlaß bei Drehung der Scheiben gegeneinander jeweils nur einem Durchlaß in der anderen Scheibe entspricht.

12. Gasuhr nach Anspruch 4, **dadurch gekennzeichnet, daß** die Betätigungseinrichtung einen Schrittmotor aufweist.

## Revendications

1. Procédé de mesure d'une quantité de gaz circulant par unité de temps dans un tuyau muni d'un étranglement réglable ayant un certain nombre de sections d'étranglement différentes pouvant être sélectionnées, comprenant la mesure d'un paramètre de pression du gaz, la sélection d'une section d'étranglement plus grande ou plus petite respectivement en fonction d'une hausse ou d'une baisse du paramètre de pression, et le calcul de la quantité de gaz d'après le paramètre de pression et la section d'étranglement sélectionnée, **caractérisé en ce que** le paramètre de pression est constitué par la différence de pression d'un côté à l'autre de l'étranglement, à chaque section d'étranglement correspond une paire composée d'une différence limite supérieure de pression et d'une différence limite inférieure de pression, ladite paire de limites constituant une gamme de valeurs mesurables de différences de pression, et une section d'étranglement plus grande ou plus petite est sélectionnée lorsque la différence de pression mesurée est respectivement supérieure ou inférieure respectivement à la différence limite supérieure de pression ou à la différence limite inférieure de pression correspondant à la section d'étranglement sélectionnée existant au moment actuelle, et en ce que la quantité de gaz est calculée à l'aide du produit d'une fonction de la différence de pression réellement mesurée et d'un facteur dépendant de la section d'étranglement sélectionnée.

2. Procédé selon la revendication 1, **caractérisé en ce que**, lorsque la quantité de gaz diminue, une section d'étranglement progressivement plus petite est sélectionnée.

3. Procédé selon la revendication 1 ou 2, **caractérisé en ce que** la différence limite inférieure de pression correspondant à une section d'étranglement est amenée à correspondre à une quantité de gaz plus faible qu'une quantité de gaz amenée à correspondre à la différence limite supérieure de pression correspondant à une plus petite section d'étranglement immédiatement précédente.

4. Débitmètre à gaz, comportant un tuyau à étranglement réglable permettant le passage d'un flux de gaz, un capteur de pression pour mesurer un paramètre de pression du gaz, un moyen formant soupape disposé au niveau de l'étranglement, un moyen de commande relié au capteur de pression et au moyen formant soupape, et qui règle le moyen formant soupape en fonction du paramètre de pression pour sélectionner une section d'étranglement parmi un certain nombre de sections d'étranglement différentes, tout en sélectionnant une section d'étranglement plus grande ou plus petite en fonction respectivement d'une hausse ou d'une baisse du paramètre de pression, et un moyen de calcul relié au moyen de commande et conçu pour calculer la quantité de gaz passant dans le tuyau par unité de temps d'après le paramètre de pression et la section d'étranglement sélectionnée et pour fournir une valeur de mesure de quantité en fonction de la section d'étranglement sélectionnée, **caractérisé en ce que** le capteur mesure la différence de pression dans l'étranglement, à chaque section d'étranglement sélectionnable correspondant une paire composée d'une différence limite supérieure de pression et d'une différence limite inférieure de pression stockées dans une mémoire du moyen de calcul, ladite paire de limites constituant une plage de valeurs mesurables de différences de pression, le moyen de calcul recevant une valeur qui correspond à la différence réelle de pression, sélectionnant une section d'étranglement plus grande ou plus petite lorsque la différence réelle de pression mesurée est respectivement supérieure ou inférieure respectivement à la différence limite supérieure ou inférieure de pression de la section d'étranglement sélectionnée existant au moment actuelle, et calculant le débit de gaz à partir du produit d'une fonction de la valeur de la différence réelle de pression et d'un facteur dépendant de la section d'étranglement.

5. Débitmètre à gaz selon la revendication 4, **caractérisé en ce que** les sections d'étranglement sélectionnables sont progressivement plus petites à mesure que diminuent les quantités de gaz à mesurer.

6. Débitmètre à gaz selon la revendication 4 ou 5, **caractérisé en ce qu'**une différence limite inférieure de pression d'une section d'étranglement correspond à une quantité de gaz inférieure à une quantité de gaz correspondant à la différence limite supérieure de pression d'une plus petite section d'étranglement immédiatement précédente.

7. Débitmètre à gaz selon l'une des revendications 4 à 6, **caractérisé en ce que** le moyen formant soupape comprend deux clapets disposés l'un contre l'autre sensiblement perpendiculairement au parcours du flux de gaz, un moyen d'entraînement étant relié à l'un des clapets et au moyen de commande, chaque clapet ayant un passage tel que les passages forment l'étranglement, tandis que le moyen d'étranglement, en réponse à un signal de commande reçu du moyen de commande, permet de faire tourner un clapet sur l'autre clapet afin de modifier la section d'étranglement.

8. Débitmètre à gaz selon la revendication 7, **caractérisé en ce que** le moyen formant soupape comprend un troisième clapet, extérieur, disposé contre les autres clapets et ayant un passage correspondant au passage de l'autre clapet extérieur et pouvant tourner par rapport au clapet central.

9. Débitmètre à gaz selon la revendication 7 ou 8, **caractérisé en ce que** les passages des clapets ont une forme telle que lorsque l'angle de rotation relatif des clapets diminue, la section d'étranglement diminue progressivement de la section la plus grande à la section la plus petite.

10. Débitmètre à gaz selon la revendication 8 ou 9, **caractérisé en ce que** chaque passage a sensiblement la forme, vue de profil, d'une goutte en train de se désagréger, incurvée autour de la zone centrale du clapet concerné, la forme du passage d'un clapet pouvant tourner par rapport à un autre clapet en ayant une orientation opposée à celle dudit autre clapet.

11. Débitmètre à gaz selon la revendication 9 ou 10, **caractérisé en ce que** chaque clapet a un certain nombre de passages similaires, chaque passage ne correspondant qu'à un seul passage d'un autre clapet lorsque les disques sont amenés à tourner les uns par rapport aux autres.

12. Débitmètre à gaz selon la revendication 4, **caractérisé en ce que** le moyen d'entraînement comporte un moteur pas-à-pas.

Fig. 1.

Fig. 2.

*Fig: 3a.*

*Fig: 3b.*

*Fig: 4.*

*Fig: 5.*